# EUROPÄISCHE PATENTANMELDUNG

(11) **EP 0 526 693 A2**
(43) Veröffentlichungstag der Anmeldung: **10.02.1993**
(21) Anmeldenummer: 92105856.6
(22) Anmeldetag: 04.04.1992
(51) Int. Cl.: H02H 9/00, H02M 3/335

(54) **Anlaufschaltung für ein Schaltnetzteil**

(30) Priorität: 08.04.1991 DE 4111277
(71) Anmelder: DEUTSCHE THOMSON-BRANDT GMBH, D-78048 Villingen-Schwenningen (DE)
(72) Erfinder: Lehr, Steffen, W-7730 VS-Marbach (DE); Neiss, Volker, W-7730 VS-Villingen (DE); Koblitz, Rudolf, W-7730 VS-Villingen (DE); Rodriguez-Duran, José I., W-7730 VS-Villingen (DE)

(57) **Zusammenfassung**

2.1. Aufgabe ist es, bei einem Schaltnetzteil ein definiertes Einschalten und Ausschalten ohne Gefährdung von Bauteilen zu erreichen und die Stromaufnahme während der Anlaufphase nach dem Einschalten zu verringern.

2.2. Ein die Impulsspannungen erzeugendes IC (6) hat beim Einschalten eine Anlaufphase ohne Stromaufnahme, darauf eine Initialisierungsphase zum Setzen definierter interner Zustände, welche zeitlich das Einschalten der Referenzspannungsquellen einschließt, und darauf eine Normalbetriebsphase mit Impulsbetrieb.

2.3. Insbesondere Schaltnetzteil für einen Fernsehempfänger oder einen Videorecorder

## Beschreibung

Die Erfindung geht aus von einer Anlaufschaltung gemäß dem Oberbegriff des Anspruchs 1. Bei einem derartigen Schaltnetzteil besteht grundsätzlich die Gefahr, daß beim Einschalten oder beim Ausschalten Bauteile, wie insbesondere der als Leistungsschalter dienende Schalttransistor, durch undefinierte Zustände gefährdet sind. Das ist insbesondere dann der Fall, wenn an einem als Schalter arbeitenden Leistungstransistor gleichzeitig Kollektor-Spannungen und Kollektor-Ströme auftreten oder der Schalttransistor bei voller angelegter Kollektor-Spannung nicht voll durchgeschaltet ist.

Der Erfindung liegt die Aufgabe zugrunde, bei einem derartigen Schaltnetzteil ein kontrolliertes Einschalten und Ausschalten ohne Gefährdung von Bauteilen sicherzustellen und gleichzeitig die Leistungsaufnahme im Anlaufbetrieb zu verringern. Diese Aufgabe wird durch die Merkmale des Anspruchs 1 gelöst. Vorteilhafte Weiterbildungen der Erfindung sind in den Unteransprüchen angegeben. Durch eine Weiterbildung der Erfindung wird die Aufgabe gelöst, ein Schaltnetzteil der beschriebenen Art so auszubilden, daß insbesondere ein großer Regelbereich und geringe Verluste in dem Snubber-Netzwerk erzielt werden.

Die Erfindung besteht somit aus vier aufeinanderfolgenden Phasen.

Für die Anlaufphase gemäß Merkmal a) ist das IC so bemessen, daß es während einer definierten Zeit nach dem Einschalten, in der die Startspannung von 0 bis auf einen Schwellwert ansteigt, keinen Strom aufnimmt. Dadurch wird erreicht, daß der gesamte durch den Ladewiderstand fließende Ladestrom zur Aufladung des Kondensators dient und der Widerstand keinen zusätzlichen Strom für das IC oder sonstige Verbraucher liefern muß. Das bedeutet, daß am Ladewiderstand eine geringere Verlustleistung auftritt und der Widerstand billiger wird.

In der Initialisierungsphase gemäß Merkmal b) wird das IC oberhalb des Schwellwertes in dem Sinne initialisiert, daß alle Parameter und Bauteile des IC in einen definierten Zustand gebracht werden. Innerhalb dieser Initialisierungsphase wird die Referenzspannungsquelle eingeschaltet. Diese Phase dient somit dazu, unabhängig von dem Ausgangszustand eindeutige, definierte Zustände herzustellen, die als Ausgangspunkt für den folgenden Normalbetrieb für alle Bauteile optimal und ungefährlich sind.

Am Ende der Initialisierungsphase gemäß Merkmal c) wird das IC auf stationären Normalimpulsbetrieb umgeschaltet. Dabei besteht der Vorteil, daß dieses Umschalten auf Impulsbetrieb von definierten Zuständen ausgeht, die eine Gefährdung der Bauteile ausschließen.

Im Anfangsbereich des Normalbetriebes wird gemäß Merkmal d) die an dem IC anliegende, weiter sinkende Versorgungsspannung durch eine Betriebsspannung von einer getrennten Spannungsquelle ersetzt oder ergänzt. Das beruht darauf, daß der Strom durch den Ladewiderstand allein für die Speisung des IC im stationären Betrieb nicht ausreichend ist. Der von dem Ladewiderstand gelieferte Strom ist dann nur noch gering gegenüber dem von der getrennten Spannungsquelle gelieferten Strom.

Durch die beschriebenen aufeinanderfolgenden Phasen beim Einschalten werden also insgesamt eine Verringerung der Leistungsaufnahme im Anlaufbetrieb und definierte Zustände aller Bauteile zu Beginn des Impulsbetriebes in dem Sinne erreicht, daß keine Bauteile gefährdet werden.

Die Initialisierungsphase enthält vorzugsweise einen ersten Abschnitt, in dem Zustände gesetzt werden, die Stromaufnahme des IC kleiner ist als der Ladestrom und somit die Versorgungsspannung weiter ansteigt. Sie enthält einen zweiten Abschnitt mit Aktivierung aller Funktionen durch das Einschalten der Referenzspannungsquelle, in dem die Stromaufnahme des IC größer ist als der Ladestrom und demzufolge die Versorgungsspannung sinkt. Vorzugsweise enthält das IC eine Amplitudenschwellwertschaltung mit einer Zenerdiode, die unterhalb des Schwellwertes eine Stromaufnahme des IC verhindert.

Eine Weiterbildung der Erfindung besteht im Prinzip aus drei Schaltungs- und Bemessungsmerkmalen.

Gemäß Merkmal a) wird eine auf der Sekundärseite aus der Betriebsspannung gewonnene Regelinformation während der Ruhephase des Transformators in Form eines Rückladestroms über den Transformator auf die Primärseite übertragen. Sie dient dort zur Regelung der Arbeitsfrequenz und der Arbeitsdauer des Schalttransistors. Durch diese Art der Übertragung der Regelinformation von der Sekundärseite auf die Primärseite unter Ausnutzung der Ruhephase des Transformators wird ein zusätzliches Bauteil wie z.B. ein getrennter Transformator oder ein Optokoppler zur Übertragung der Regelinformation eingespart.

Gemäß Merkmal b) wird die Arbeitsfrequenz im Bereich kleiner übertragener Leistung proportional zur übertragenen Leistung geregelt. Durch die gleichzeitige Regelung der Einschaltdauer und der Ausschaltdauer des Schalttransistors wird ein maximal erreichbarer Regelbereich erzielt, da der Schalttransistor bis zu seiner maximal möglichen Einschaltdauer von etwa 50 % der Periodendauer der Arbeitsfrequenz betrieben werden kann.

Gemäß Merkmal c) erfolgt im Bereich großer übertragener Leistung das Einschalten des Schalttransistors im Anfangsbereich der Ruhephase des Transformators stets unmittelbar am Ende der von der Sekundärseite auf die Primärseite übertragenen Regelinformation. Zu diesem Zeitpunkt ist die Kollektorspannung des Schalttransistors noch klein, so daß die Verlustleistung an dem genannten Snubber-Netzwerk gering gehalten wird. Eine wesentliche Verlustleistung über diesem Netzwerk würde während der Ruhephase des Transformators nach dem Ende der eigentlichen Regelinformation entstehen, wenn der Zeitpunkt des Einschaltens des Schalttransistors nicht wie im Merkmal b) fest definiert wird. Dann könnte der Fall auftreten, daß der Schalttransistor genau dann einschaltet, wenn die Kollektorspannung in der Ruhephase des Transformators hoch ist. Die Ruhephase wird also nur soweit ausgenutzt, wie es zur Auswertung der Regelinformation zwecks Gewinnung der Regelspannung notwendig ist. Unmittelbar danach wird der Schaltransistor zwangsläufig eingeschaltet. Die Ausschaltzeitdauer des Schalttransistors wird dann im Sinne einer hohen Arbeitsfrequenz auf einen minimal notwendigen Wert beschränkt.

Durch die Kombination der Merkmale a) bis c) werden also insgesamt ein kontrollierter Anlauf beim Einschalten ohne Gefährdung von Bauteilen, ein großer Regelbereich, eine geringe Verlustleistung an dem Snubber-Netzwerk und eine einfache Schaltung erreicht.

Die Erfindung wird im folgenden anhand der Zeichnung an einen Ausführungsbeispiel beschrieben. Darin zeigen
Fig. 1 ein Prinzipschaltbild des erfindungsgemäß ausgebildeten Schaltnetzteils,
Fig. 2 die aufeinanderfolgenden Phasen beim Einschalten,
Fig. 3 aufeinanderfolgende Phasen beim Ausschalten in einem Störungsfall und
Fig. 4 eine detaillierte Schaltung zur Erzielung der einzelnen Phasen gemäß Fig. 2,
Fig. 5 ein Schaltbild des Schaltnetzteils gemäß der genannten Weiterbildung der Erfindung,
Fig. 6 Kurven zur Erläuterung der Wirkungsweise der Schaltung nach Fig. 5 und
Fig. 7 den Verlauf der Regelspannungen beim Einschalten des Schaltnetzteils gemäß Fig. 5.

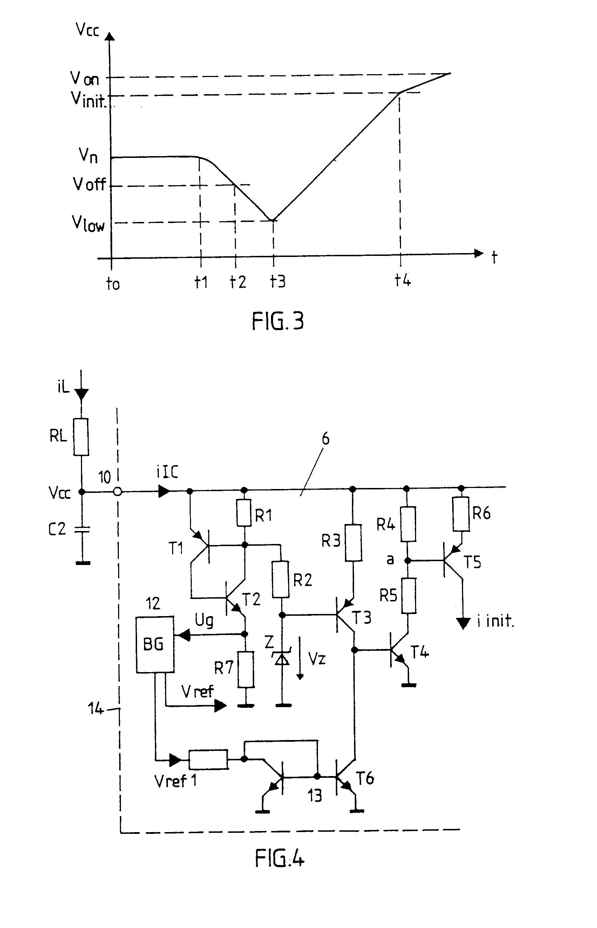

In Fig. 1 sind die Netzklemmen 1 an die Eingänge des Brückengleichrichters 2 angeschlossen, der am Ausgang an dem Ladekondensator C1 die Betriebsspannung UB für das Schaltnetzteil erzeugt. Von dem Schaltnetzteil sind dargestellt der Schalttransistor Ts, die Primärwicklung 3 des Transformators Tr, die Sekundärwicklung 4, und der Gleichrichter 5, der an dem Kondensator C3 eine Betriebsspannung + U1 erzeugt. Der Schalttransistor Ts wird von dem IC 6 über die Treiberstufe 7 mit der impulsförmigen Spannung 11 angesteuert.

Die Vorgänge beim Einschalten der Schaltung gemäß Fig. 1 mit den verschiedenen aufeinanderfolgenden Phasen werden anhand der Fig. 2 erläutert. Bei to wird die Netzspannung an die Klemmen 1 angelegt. Daraufhin fließt über den Ladewiderstand RL der Ladestrom iL in den Kondensator C2, so daß die Startspannung Vcc am Kondensator C2 linear ansteigt. Das IC 6 ist so bemessen, daß seine Stromaufnahme i!C zunächst null ist. Der gesamte über RL fließende Ladestrom iL dient also nur zum Aufladen des Kondensators C2, also zur Erzeugung der Versorgungsspannung Vcc. Während dieser Anlaufphase von to bis t1 nimmt also das IC 6 keinen Strom auf. Bei t1 wird durch eine Schwellwertschaltung im IC 6 die Stromaufnahme i!C eingeleitet. Ein Teil von iL fließt jetzt in das IC 6 hinein. Dieser Anteil ist aber zunächst noch geringer als iL, so daß die Spannung Vcc mit verringerter Steigung weiter ansteigt. Während dieser Phase von t1 - t2 werden alle Bauteile und Zustände im IC 6 auf definierte Werte gesetzt. Das IC 6 bleibt aber zunächst noch inaktiv, macht also noch keinen Impulsbetrieb. Wenn Vcc den Wert Von erreicht wird im IC 6 eine Referenzspannungsquelle aktiviert, die auch als Bandgap bezeichnet wird. Ab t2 werden somit alle Funktionen des IC 6 aktiviert. Da bis t3 noch die Initialisierungsphase dauert, wird der externe Leistungsschalter während t2 - t3 aktiv ausgeschaltet. Durch die Aktivierung der Bandgap steigt die Stromaufnahme i!C so an, daß nunmehr i!C größer wird als iL. Das bedeutet, daß Vcc sinkt, weil jetzt C2 entladen wird. Die Inditialisierungsphase dauert also über den Zeitraum t1 - t3, in dem Vcc größer als Vinit ist. Bei t3 ist die Initialisierungsphase beendet. Das IC 6 wird jetzt bei definierten Zuständen aller Bauteile in den Impulsbetrieb umgeschaltet und erzeugt jetzt die Impulse 11, die den Transistor Ts abwechselnd leitend steuern und sperren. Da jetzt die Stromaufnahme i!C weiter ansteigt, sinkt Vcc schneller ab. Bei Voff würde das IC 6 wieder abschalten. Dadurch, daß der Transistor Ts angesteuert wird, gelangt der Transformator Tr in den Impulsbetrieb. Dadurch entsteht auch eine Impulsspannung an der Wicklung 8, die über den Gleichrichter 9 gleichgerichtet wird und als positive Spannung an der Klemme 10 des IC 6 wirksam wird. Das ist etwa beim Zeitpunkt t4. Die Spannung an der Klemme 10 wird jetzt von der Wicklung 8 bestimmt. Diese ist in der Lage, den stark gestiegenen Stromverbrauch des IC 6 zu decken. Bevor Vcc den Wert Voff erreichen kann, stellt sich somit eine stationäre Betriebsspannung Vn an der Klemme 10 ein, die ein einwandfreies Arbeiten des IC 6 sicherstellt. Der Ladestrom iL trägt jetzt nur noch minimal zur Aufrechterhaltung der Spannung an der Klemme 10 bei. Die Stromversorgung für das IC 6 geht also ab t5 gewissermaßen in einen Selbstversorgungsbetrieb über die Wicklung 8 und den Gleichrichter 9 über.

Fig. 3 zeigt die entsprechenden Verhältnisse beim Ausschalten. Bei to hat Vcc den Normal-Nennwert Vn gemäß Fig. 2. Bei t1 tritt eine Überlast oder eine sonstige Störung ein. Zunächst versucht die Schaltung, durch Regelung der Stromflußdauer in Ts und der Frequenz der Impulse 11 die Überlast auszuregeln und die Spannung +U1 konstant zu halten. Bei Überlast oder einem Fehler ist die Regelung schließlich nicht mehr in der Lage auszuregeln, da z.B. die maximale Frequenz, die maximale Einschaltdauer und damit der maximale Stromendwert im Transistor Ts erreicht sind. Dann beginnt Vcc zu sinken. Bei Erreichen von Voff bei t2 schaltet das IC 6 aus und liefert keine Impulse 11 mehr. Der Transistor Ts wird dann nicht mehr mit Impulsen angesteuert und ein Gefährdung von Bauteilen wird vermieden. Auch die als Bandgap bezeichnete Vorspannungsquelle im IC 6 wird ausgeschaltet. Stattdessen jedoch erfolgt während des Zeitraums t2 - t3 ein definiertes aktives Ausschalten des Transistors Ts. Das ist wichtig, weil sonst in Abhängigkeit von dem jeweiligen Endzustand der Transistor Ts gefährdet sein kann. Ein derartiges aktives Ausschalten besteht vorzugweise darin, daß an die Basis von Ts eine Sperrspannung gelegt wird, die ein schnelles Ausräumen der Ladungsträger bewirkt. Während dieses Zeitraums wird der Stromverbrauch des IC's künstlich größer als iL gehalten, damit die Versorgungsspannung Vcc weiter absinkt. Sinkt die Versorgungsspannung unter Vlow wird das IC 6 vollständig abgeschaltet, also auch im IC enthaltende Flip-Flops gelöscht. Die Stromaufnahme i!C wird dann null. Da jetzt die Klemme 10 durch das IC 6 nicht mehr belastet ist, steigt die Spannung Vcc ab t3 wieder an. Bei t4 erreicht Vcc den Wert Vinit. Das entspricht wieder dem Zeitpunkt t1 in Fig. 2. Das Schaltnetzteil wird dann in der beschriebenen Weise wieder eingeschaltet. Wichtig dabei ist, daß zwischen dem Ausschalten und dem Einschalten eine definierte, ausreichende Zeit besteht, damit die Bauelemente im Fehlerfall durch das wiederholte Ein- und Ausschalten des Schaltnetzteils nicht überlastet werden.

Fig. 4 zeigt eine detaillierte Schaltung im IC 6 zur Realisierung der Vorgänge gemäß Fig. 2. Die Wirkungsweise dieser Schaltung wird im folgenden nacheinander für die einzelnen Phasen in Fig. 2 erläutert.

### Anlaufphase von to - t1

Während dieser Zeit ist Vcc kleiner als die Zenerspannung Vz der Zenerdiode Z. Da über die Widerstände R1, R2, R3 kein Strom fließen kann, bleiben auch die Transistoren T1, T2, T3, T4, T5 gesperrt. Die Stromaufnahme i!C ist dann in der beschriebenen Weise null. Wenn Vcc den Wert Vz erreicht, fließt zunächst ein kleiner Strom über R1, R2. T1 bleibt zunächst gesperrt. T3 wird jedoch schon leitend, bevor das durch T1, T2 gebildete Flip-Flop auslöst. Der leitende Transistor T3 erzeugt einen Basisstrom im Transistor T4, so daß T4 leitend wird. Dadurch gelangt vom Verbindungspunkt a von R4 und R5 eine Spannung an die Basis von T5, so daß T5 auch leitend wird. Dadurch wird der Initialisierungsstrom init erzeugt, der die Initialisierung von t1 - t3 in Fig. 2 bewirkt. Die als Spannungsreferenzquelle dienende, dargestellte Bandgap 12 ist dabei wegen des gesperrten Transistors T2 während der Zeitdauer t1 - t2 zunächst noch ausgeschaltet. Während dieser Zeit werden in der beschriebenen Weise die internen Zustände definiert eingestellt. Durch die ansteigende Spannung Vcc steigt auch der Strom durch R1 weiter an. Bei t2 schaltet das Flip-Flop T1/T2 ein, wobei T1 und T2 leitend werden. An R7 entsteht jetzt eine Spannung Ug, die die Bandgap 12 einschaltet. Diese erzeugt daraufhin die Referenzspannung Vref für den zweiten Teil t2 - t3 der Initialisierungsphase und für den Normalbetrieb. Durch das Einschalten der Bandgap 12 wird jetzt i!C größer als iL, so daß Vcc wieder sinkt. Der Strom durch T3 wird somit wieder geringer. Die Bandgap 12 liefert eine konstante Referenzspannung Vref1 an die Stromspiegelschaltung 13, die im Transistor T6 einen konstanten Strom bewirkt. Der Strom durch R3 wird jetzt kleiner als der durch die Stromspiegelschaltung 13 gelieferte Strom. T4 wird daher nicht mehr angesteuert, so daß der Initialisierungsstrom iinit wieder abgeschaltet wird. Das ist bei t3 in Fig. 2 am Ende der Initialisierungsphase. Während der Zeitdauer t2 - t3 wird der externe Leistungstransistor Ts aktiv ausgeräumt. Durch die Schaltung wird also sichergestellt, daß die die Referenzspannungen für das gesamte IC 6 liefernde Bandgap 12 eingeschaltet ist, bevor die Initialisierungsphase bei t3 beendet ist. Die gestrichelte Linie 14 stellt die Peripherie des IC 6 dar. Die Übernahme der Stromversorgung des IC 6 durch die Wicklung 8 und den Gleichrichter 9 etwa im Zeitraum t4 - t5 gemäß Fig. 2 erfolgt außerhalb des IC 6 in der beschriebenen Weise.

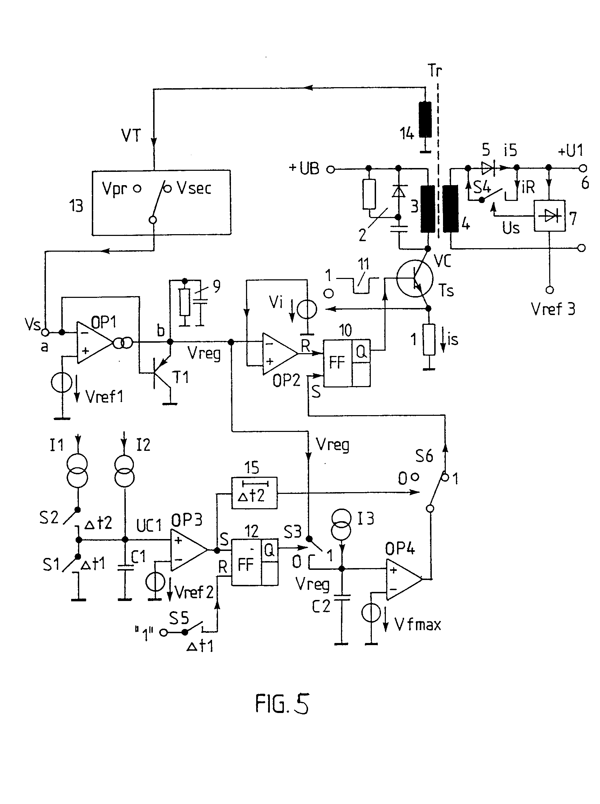

Fig. 5 zeigt im Prinzip ein Schaltnetzteil mit dem als Leistungsschalter arbeitenden Schalttransistor Ts, dem Strommeßwiderstand 1, dem zur Dämpfung von Spannungsspitzen dienenden sogenannten Snubber-Netzwerk 2 aus Widerstand, Diode, Kondensator und dem Transformator Tr mit der Primärwicklung 3 und der Sekundärwicklung 4. Die Sekundärwicklung 4 liefert über den Gleichrichter 5 an der Klemme 6 die positive Betriebsspannung + U1. In der Vergleichsstufe 7 wird die Spannung + U1 mit einer Referenzspannung Vref3 verglichen. Daraus wird eine Stellgröße Us gewonnen. Us betätigt den Schalter S4 derart, daß während der Ruhephase des Transformators Tr, in der Ts und die Diode 5 nichtleitend sind, ein Rückladestrom iR entgegengesetzt zum Ladestrom i5 durch die Diode 5 in den Transformator Tr hineinfließt. Dieser Rückladestrom iR beinhaltet eine Information über die Größe von U1. Auf der Primärseite wird die entsprechende induzierte Spannung selektiv ausgewertet und zur Regelung der Einschaltdauer und Arbeitsfrequenz von Ts zwecks Stabilisierung von + U1 verwendet. Im folgenden wird die Ansteuerung des Schalttransistors Ts für verschiedene Betriebsphasen erläutert.

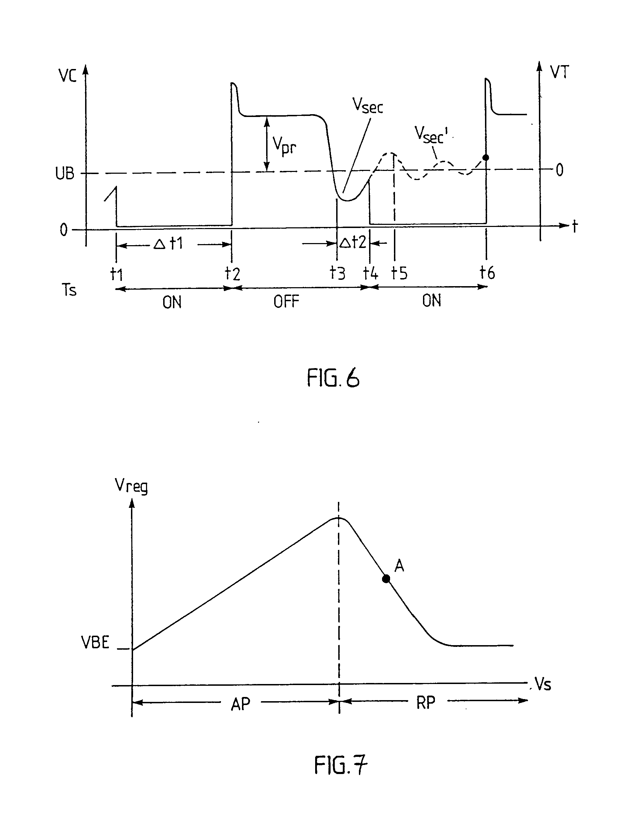

Fig. 6 zeigt die Spannung VC am Kollektor von Ts mit der Gleichspannungskomponente in der Größe von UB. Von der Zusatzwicklung 14 des Transformators Tr wird die Spannung VT abgenommen, die den gleichen Verlauf wie VC hat, jedoch keine Gleichspannungskomponente aufweist. Die Spannung VT gelangt über die Auswertstufe 13 auf die Klemme a. Die Stufe 13 dient dazu, von der Spannung VT zeitlich nacheinander Spannungsanteile Vpr und Vsec in der folgenden beschriebenen Weise auszuwerten.

### Anlaufphase

Die Spannung Vs an der Klemme a ist zunächst nicht vorhanden, weil der Transformator Tr sich noch nicht im Impulsbetrieb befindet und somit auch die Spannung VT noch nicht vorhanden ist. Aufgrund der Referenzspannung Vref1 am " + "-Eingang des Operationsverstärkers OP1 fließt daher zunächst ein hoher Strom in das RC-Glied 9, so daß die Regelspannung Vreg an der Klemme b beginnend von der Basis/Emitter-Spannung VBE des Transistors T1 ansteigt. Dies ist durch die Anlaufphase AP in Fig. 3 dargestellt. Der Transistor T1 bewirkt, daß Vreg nicht größer werden kann als Vs zuzüglich der Basis/Emitter-Spannung von T1. Damit wird verhindert, daß im Schalttransistor Ts sofort nach dem Einschalten ein großer Kollektorstrom fließt. Wenn Vs die Spannung Vref1 erreicht, übernimmt der Operationsverstärker OP1 die Funktion, derart, daß nunmehr Vreg in der Regelphase RP gemäß Fig. 3 mit steigendem Vs abnimmt. Die Regelspannung Vreg ist von der Regelinformation Vsec, die durch den Rückladestrom iR auf die Primärseite übertragen wird, abhängig. Die Regelspannung Vreg, die somit die Regelinformation beinhaltet, gelangt auf den "-"-Eingang des Operationsverstärkers OP2, an dessen " + "-Eingang eine Vorspannung Vi angelegt ist. Vi ist abhängig von dem Strom is durch den Widerstand 1.

### Regelung der Einschaltdauer von Ts

Die Stabilisierung von U1 erfolgt durch Regelung der Einschaltdauer und der Variation der Arbeitsfrequenz von Ts. Zu Beginn der Stromflußphase sind is und damit die Spannung am Emitter von Ts gering. Daher ist auch Vi klein. Der Reset-Eingang R des Flip Flop 10 wird nicht angesteuert. Der Q-Ausgang bleibt daher auf "1 ", so daß der Transistor Ts eingeschaltet bleibt. Wenn die mit is ansteigende Spannung Vi größer als Vreg wird, erscheint am Ausgang von OP2 Pegel "1 ", so daß das Flip Flop 10 am Eingang R rückgesetzt wird. Dadurch geht der Q-Ausgang auf "0", und der Transistor Ts wird abgeschaltet. Der Wert von is, bei dem die Abschaltung von Ts erfolgt, ist also abhängig von Vreg, somit von Vsec und daher auch von der Betriebsspannung U1. Wenn z.B. durch eine erhöhte Last an der Klemme 6 + U1 kleiner werden will, sinkt auch die Regelinformation Vsec, so daß gemäß Fig. 3 Punkt A in der Ruhephase RP Vreg ansteigt. Das bedeutet, daß auch der Maximalwert von is durch die Wirkung von OP2 ansteigt und die über Tr übertragene Energie zwecks Stabilisierung von + U1 größer wird.

### Regelung der Ausschaltdauer von Ts zur Frequenzregelung

Bei t1 in Fig. 6 wird der Schalter S1 während der Zeitdauer W t1 geschlossen. Dadurch wird die Spannung UC1 am Kondensator C1 gleich null, der Ausgang des Operationsverstärkers OP3 geht auf "0". Der Rücksetzeingang R des Flip Flop 12 ist während der Zeit t1 auf Pegel "1 gelegt. Der Q-Ausgang des Flip Flop 12 wird daher "0", so daß der Schalter S3 geschlossen wird. Dadurch wird die Regelspannung Vreg an den Kondensator C2 und den " + "-Eingang des Operationsverstärkers OP4 angelegt. Dabei ist zunächst Vreg kleiner als Vfmax am "-"-Eingang von OP4, so daß am Ausgang von OP4 zunächst kein Signal erscheint. Bei t3 wird für den Zeitraum t2 der Schalter S2 geschlossen. Dadurch wird C1 durch einen entsprechend großen Strom 11 schnell aufgeladen. UC1 am "+"-Eingang von OP3 erreicht sehr schnell den Wert von Vref2 am "-"-Eingang, so daß der Ausgang von OP3 auf "1 geht. Dadurch wird das Flip Flop 12 am Eingang S gesetzt und der Schalter S3 geöffnet. Der noch die Regelspannung Vreg führende Kondensator C2 wird dadurch an Vreg ander Klemme b getrennt. Der Kondensator C2 wird jetzt durch einen kleinen Strom 13 in der Größenordnung von 1 uA weiter aufgeladen. Wenn jetzt die Spannung an C2 den Wert Vfmax erreicht, geht der Ausgang von OP4 auf "1 ". Dadurch wird das Flip Flop 10 am Eingang S gesetzt. Dessen Q-Ausgang geht auf "1 ", und Ts wird wieder eingeschaltet. Der Einschaltzeitpunkt t4 ist somit von Vreg abhängig, da der Kondensator C2 jeweils von dem Wert Vreg an durch 13 aufgeladen wird.

Wenn z.B. die Spannung U1 durch eine hohe Last an der Klemme 6 sinken will, wird der Anteil Vsec in VC bzw. VT kleiner und demzufolge Vreg in der Ruhephase RP an der Klemme b gemäß Fig. 3 größer. Vreg am Kondensator C2 im Zeitpunkt t3 beim Öffnen von S3 wird also größer. Bei der folgenden Aufladung von C2 durch 13 wird also das Ansprechen von OP4 früher erreicht. Das bedeutet, daß Ts früher eingeschaltet wird, die Ausschaltdauer verringert und somit in erwünschter Weise aufgrund der erhöhten Last an der Klemme 6 die Arbeitsfrequenz erhöht wird. Die Stabilisierung von + U1 durch Regelung der Einschaltdauer von Ts in der bereits beschriebenen Weise bleibt dabei unverändert.

Regelung der Ausschaltdauer von Ts bei hoher Leistung Im Bereich hoher Leistung würde in dem Widerstand des Snubber-Netzwerkes 2 eine relativ hohe Verlustleistung entstehen, wenn der Schalttransistor Ts z.B. zum Zeitpunkt t5 (Vsec') eingeschaltet werden würde. Deshalb wird bei hoher Leistung unter Aufgabe der beschriebenen Frequenzregelung der Schalttransistor Ts grundsätzlich bei t4 am Ende des für die Regelung benötigten Spannungsteiles Vsec wieder eingeschaltet. Dies wird in der Schaltung nach Fig. 1 folgendermaßen erreicht: Vfmax ist so eingestellt, daß bei hoher Leistung Vreg beim Schließen des Schalters S3 bereits größer ist als Vfmax. Der Strom 13 hat dann nicht mehr die beschriebene Wirkung zur Regelung der Abschaltdauer von Ts. Vielmehr wird in erwünschter Weise Ts ohne Regelung der Abschaltdauer immer bei t4 am Ende von Vsec eingeschaltet.

Der Schalter S6 hat dabei noch folgende Bedeutung. Die Regelspannung Vreg erscheint durch das Schließen von S3 während W t1 bereits am Kondensator C2. Dadurch würde der Ausgang von OP4 an sich das Flip Flop 10 schon nach t2 setzen und Ts einschalten. Das ist aber nicht erwünscht, weil Vsec von t3 - t4 noch ausgewertet werden muß. Deshalb wird der Schalter S6 erst dann geschlossen, wenn das zum Zeitpunkt t3 auftretende "1 "-Signal des Operationsverstärkers OP3 um t2 verzögert zum Zeitpunkt t4 erscheint. Für die Betätigung des Schalters S6 im richtigen Zeitpunkt ist noch die Verzögerungsstufe 15 vorgesehen, die das Schaltsignal vom Setzeingang S des Flip Flop 12 und die Zeit W t2 verzögert. Das Setzen des Flip Flop 10 und damit das Einschalten von Ts erfolgen also dann, wenn einerseits Vreg über S3 an den " + "-Eingang von OP4 angelegt und zusätzlich der Schalter S6 durch OP3 geschlossen ist.

## Patentansprüche

1. Anlaufschaltung für ein Schaltnetzteil mit definiertem Einschaltverhalten mit einem Schalttransistor (Ts) und einer Anlaufschaltung mit einem Kondensator (C2), der nach dem Einschalten über einen an eine Netzklemme angeschlossenen, einen Ladestrom (iL) liefernden Widerstand (RL) aufgeladen wird und eine Versorgungsspannung (Vcc) für einen den Schalttransistor (Ts) ansteuernden integratierten Schaltkreis (IC) liefert, gekennzeichnet durch folgende Merkmale:
a) Das IC (6) ist so bemessen, daß es während einer Anlaufphase (to - t1) nach dem Einschalten, in der die Startspannung (Vcc) von null bis auf einen Schwellwert (Vinit) ansteigt, keinen Strom (iIC) aufnimmt.
b) Oberhalb des Schwellwertes (Vinit) wird während einer Initialisierungsphase (t1 - t3) das IC (6) in dem Sinne initialisiert, daß alle Parameter und Bauteile des IC in einen definierten Zustand gebracht und Referenzspannungsquellen (12) eingeschaltet werden.
c) Am Ende der Initialisierungsphase (t1 - t3) wird das IC (6) auf stationären Normalimpulsbetrieb umgeschaltet.
d) Im Anfangsbereich des Normalbetriebs wird die an dem IC (6) anliegende, weiter sinkende Startspannung (Vcc) durch eine Betriebsspannung von einer getrennten Spannungsquelle (8, 9) ersetzt oder ergänzt.

2. Schaltung nach Anspruch 1, dadurch gekennzeichnet, daß die Initialisierungsphase (t1 - t3) einen ersten Abschnitt (t1 - t2) enthält, in dem Zustände gesetzt werden, die Stromaufnahme (iIC) kleiner ist als der Ladestrom (iL) und die Versorgungsspannung (Vcc) weiter ansteigt, und einen zweiten Abschnitt mit Aktivierung aller Funktionen und Referenzspannungsquellen enthält, in dem der externe Leistungsschalter aktiv ausgeschaltet wird, die Stromaufnahme (iIC) größer ist als der Ladestrom (iL) und die Startspannung (Vcc) sinkt.

3. Schaltung nach Anspruch 1, dadurch gekennzeichnet, daß das IC (6) eine Amplitudenschwellwertschaltung mit einer Zenerdiode (Z) enthält, die unterhalb des Schwellwertes (Vinit) eine Stromaufnahme des IC (6) verhindert.

4. Schaltung nach Anspruch 1, dadurch gekennzeichnet, daß das IC (6) eine Schaltung enthält, die beim Abschalten des IC (6) im Störungsfall eine künstliche Stromaufnahme bewirkt.

5. Schaltung nach Anspruch 1, dadurch gekennzeichnet, daß das IC (6) eine Schaltung enthält, die beim Abschalten des IC (6) im Störungsfall wie auch im normalen Betriebsmodus eine Sperrspannung zum aktiven Abschalten des Schalttransistors (Ts) erzeugt.

6. Schaltnetzteil mit einem Trenntransformator, einem Schalttransistor und einem an eine Transformatorwicklung angeschlossenen Snubber-Netzwerk (2) zur Reduzierung von Spannungsspitzen, gekennzeichnet durch folgende Merkmale:
a) Eine auf der Sekundärseite aus der Betriebsspannung (U1) gewonnene Regelinformation (Vsec) wird während der Ruhephase des Transformators (Tr) in Form eines Rückladestroms (iR) über den Transformator (Tr) auf die Primärseite übertragen und dient dort über eine Regelschaltung zur Regelung der Arbeitsfrequenz und der Einschaltdauer des Schalttransistors (Ts).
b) Im Bereich kleiner übertragener Leistung ist die Arbeitsfrequenz proportional zur übertragenen Leistung geregelt.
c) Im Bereich großer übertragener Leistung erfolgt die Abschaltung des Schalttransistors (Ts) im Anfangsbereich der Ruhephase des Transformators (Tr) stets unmittelbar am Ende der von der Sekundärseite auf die Primärseite übertragenen Regelinformation (Vsec).

7. Schaltnetzteil nach Anspruch 6, dadurch gekennzeichnet, daß der Impuls (11) zum Abschalten des Schalttransistors (Ts) in einer ersten Vergleichsstufe (OP2) erzeugt ist, an deren Eingänge eine vom Strom (is) durch den Schalttransistor (Ts) abhängige Spannung (Vi) und eine aus der Regelinformation (Vsec) abgeleitet Regelspannung (Vreg) angelegt sind.

8. Schaltnetzteil nach Anspruch 7, dadurch gekennzeichnet, daß der Impuls (11) zum Einschalten des Schalttransistors (Ts) in einer zweiten Vergleichsstufe (OP4) erzeugt ist, an deren Eingänge eine konstante Referenzspannung (Vfmax) und die Regelspannung (Vreg) angelegt sind.

9. Schaltnetzteil nach Anspruch 8, dadurch gekennzeichnet, daß die Vergleichsschaltung (OP4) so bemessen ist, daß der Impuls (11) zum Einschalten des Schalttransistors (Ts) unmittelbar am Ende der Regelinformation (Vsec) ausgelöst wird.

10. Schaltung nach Anspruch 8, dadurch gekennzeichnet, daß an einen Eingang der zweiten Vergleichsstufe (OP4) ein Kondensator (C2) angeschlossen ist, an den einerseits eine Konstantstromquelle (13) und andererseits die Regelspannung (Vreg) über einen Schalter (S3) angelegt ist, der während der Ruhephase und damit auch während der Regelinformation (Vsec) geöffnet wird.

11. Schaltung nach Anspruch 6, dadurch gekennzeichnet, daß eine Zusatzwicklung (14) des Transformators (Tr) an den Eingang einer Auswertstufe (13) angeschlossen ist, die zeitlich nacheinander verschiedene Spannungsanteile (Vpr, Vsec) der Spannung (VT, VC) am Transformator (Tr) auswertet und der Regelschaltung zuführt.
